(19) **Europäisches Patentamt / European Patent Office / Office européen des brevets**

(11) **EP 2 794 481 B1**

(12) **FASCICULE DE BREVET EUROPEEN**

(45) Date de publication et mention de la délivrance du brevet:
**08.02.2017 Bulletin 2017/06**

(21) Numéro de dépôt: **12816778.0**

(22) Date de dépôt: **21.12.2012**

(51) Int Cl.:
*C01B 33/20* *(2006.01)*   *C01B 33/22* *(2006.01)*
*C09C 1/28* *(2006.01)*

(86) Numéro de dépôt international:
**PCT/FR2012/053060**

(87) Numéro de publication internationale:
**WO 2013/093376 (27.06.2013 Gazette 2013/26)**

(54) **PROCÉDÉ DE PRÉPARATION D'UNE COMPOSITION TALQUEUSE MAGNÉTIQUE ET COMPOSITION TALQUEUSE MAGNÉTIQUE**

VERFAHREN ZUR HERSTELLUNG EINER MAGNETISCHEN TALKZUSAMMENSETZUNG UND MAGNETISCHE TALKZUSAMMENSETZUNG

PROCESS FOR PREPARING A MAGNETIC TALCOUS COMPOSITION, AND MAGNETIC TALCOUS COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2011 FR 1104029**

(43) Date de publication de la demande:
**29.10.2014 Bulletin 2014/44**

(73) Titulaires:
- **Centre National de la Recherche Scientifique (C.N.R.S.)**
  **75794 Paris Cedex 16 (FR)**
- **Université Paul Sabatier Toulouse III**
  **31400 Toulouse (FR)**

(72) Inventeurs:
- **MARTIN, François**
  **F-31570 Sainte Foy D'aigrefeuille (FR)**
- **MICOUD, Pierre**
  **F-31390 Peyssies (FR)**
- **DUMAS, Angela**
  **F-31320 Pechabou (FR)**
- **LE ROUX, Christophe**
  **F-31290 Avignonet Lauragais (FR)**
- **GARDES, Emmanuel**
  **F-14000 Caen (FR)**

(74) Mandataire: **Cabinet BARRE LAFORGUE & associés**
**35, rue Lancefoc**
**31000 Toulouse (FR)**

(56) Documents cités:
**WO-A2-2007/087172     WO-A2-2008/009799**

- **DATABASE CA [Online] CHEMICAL ABSTRACTS SERVICE, COLUMBUS, OHIO, US; 19 septembre 1986 (1986-09-19), ONO, HIDEO: "Magnetic powder", XP002680273, extrait de STN Database accession no. 105:107131 & JP 61 091907 A (TAIHO INDUSTRIES CO., LTD., JAPAN) 10 mai 1986 (1986-05-10)**
- **DATABASE WPI Week 200864 Thomson Scientific, London, GB; AN 2008-K75543 XP002680258, & JP 2008 143720 A (ADCHEMCO CORP) 26 juin 2008 (2008-06-26)**
- **SANCHEZ R ET AL: "Study of Fe(II) oxidation in ground magnetite", MATERIALS RESEARCH BULLETIN, ELSEVIER, KIDLINGTON, GB, vol. 25, no. 5, 1 mai 1990 (1990-05-01), pages 553-561, XP025463284, ISSN: 0025-5408, DOI: 10.1016/0025-5408(90)90020-3 [extrait le 1990-05-01]**

**Description**

L'invention concerne un procédé de préparation d'une composition comprenant des particules minérales magnétiques ainsi qu'une composition comprenant de telles particules minérales magnétiques.

Dans tout le texte, on désigne par « particule minérale » toute particule inorganique, qui ne contient de carbone, le cas échéant, que sous forme de carbonate ou de cyanure.

Dans tout le texte, on désigne par « silicate lamellaire 2:1 » ou « silicate lamellaire de type T.O.T. » tout silicate lamellaire (ou phyllosilicate) dont chaque feuillet élémentaire est constitué par l'association de deux couches de tétraèdres inversées situées de part et d'autre d'une couche d'octaèdres, chaque couche d'octaèdres étant formée à partir d'octaèdres de type $YO_6$ (Y désignant un cation) reliés les uns aux autres et chaque couche de tétraèdres étant constituée d'une couche continue bidimensionnelle de tétraèdres de type $SiO_4$, dans laquelle chaque tétraèdre est relié à ses voisins en partageant trois de ses sommets. Au vu de leur structure, les phyllosilicates 2:1 sont également qualifiés de type T.O.T. (c'est-à-dire tétraèdre-octaèdre-tétraèdre).

En d'autres termes, dans un silicate lamellaire 2:1, des réseaux bidimensionnels de tétraèdres sont agencés de part et d'autre d'une couche médiane d'octaèdres, chaque couche d'octaèdres étant formée de deux plans d'ions $O^{2-}$ et $OH^-$ (dans la proportion molaire $O^{2-}/OH^-$ de 2/1) et chaque couche de tétraèdres étant formée de tétraèdres présentant chacun un sommet occupé par un oxygène d'une couche octaédrique et trois sommets occupés par des oxygènes sensiblement coplanaires. En outre, on dit que les oxygènes partagés des tétraèdres forment un plan basal d'oxygènes de symétrie hexagonale ou ditrigonale.

Les phyllosilicates sont constitués par un empilement régulier ou irrégulier de feuillets élémentaires de structure cristalline, dont le nombre varie de quelques unités à plusieurs milliers d'unités.

Le groupe des silicates lamellaires 2:1 présentant une charge électrique nulle est notamment constitué du talc, de la willemseite et de la pyrophyllite. Aussi, dans la suite du texte, on désigne par « particule talqueuse » ou « composition talqueuse » toute particule ou toute composition comprenant des particules appartenant au groupe des silicates lamellaires 2:1 présentant une charge nulle.

Dans tout le texte, on désigne par « traitement hydrothermal » tout traitement réalisé dans un récipient fermé, tel qu'un autoclave, en présence d'eau à une température prédéterminée et à une pression supérieure à la pression atmosphérique.

Les silicates lamellaires 2:1 tels que le talc de formule $Si_4Mg_3O_{10}(OH)_2$, sont utilisés dans divers domaines industriels, tels que le domaine des polymères, du papier, des peintures et vernis, du textile, de la métallurgie, de la pharmaceutique, des cosmétiques, ou encore des produits phytosanitaires dans lesquels les phyllosilicates sont utilisés, par incorporation dans une composition, à titre de charge inerte (pour leur stabilité chimique ou encore pour la dilution de composés actifs de coût supérieur) ou de charges fonctionnelles (par exemple pour renforcer les propriétés mécaniques de certains matériaux).

WO 2008/009799 propose un procédé de préparation d'une composition talqueuse comprenant au moins un minéral synthétique silico/germano-métallique de type $Si_4Mg_3O_{10}(OH)_2$ par traitement hydrothermal d'un hydrogel silico/germano-métallique, à l'état liquide à une température comprise entre 300°C et 600°C. Une telle composition talqueuse selon WO 2008/009799 comprend des particules silico/germano-métalliques présentant des similarités structurelles avec le talc naturel.

Or, il pourrait être intéressant de disposer de particules minérales appartenant au groupe des silicates lamellaires présentant des propriétés magnétiques, telles que des propriétés ferromagnétiques ou ferrimagnétiques et en particulier ferrimagnétiques.

L'invention vise donc à proposer un procédé de préparation d'une composition comprenant des particules minérales silicatées présentant des propriétés magnétiques.

WO 2007/087172 concerne une litière pour animaux de compagnie composée de particules métalliques magnétiquement attirables et d'un matériau particulaire absorbant. Le document préconise d'utiliser des particules magnétiques et des particules absorbantes dont au moins 25 %, et de préférence 65 %, passent à travers un tamis de 50 mesh. La mise en contact est réalisée dans un mélangeur à haut cisaillement.

JP 61091907 décrit la préparation d'une poudre magnétique par mélange d'une poudre de particules non magnétiques présentant une taille comprise entre 0,5 micron et 10 microns, avec un fluide dans lequel sont dispersées des particules de ferrite. Le fluide est ensuite éliminé par évaporation à une température supérieure à 250°C.

L'invention vise à proposer un procédé de préparation d'une composition comprenant des particules minérales silicatées synthétiques présentant des propriétés magnétiques.

L'invention vise à proposer un tel procédé dont la mise en oeuvre est simple et rapide, et est compatible avec les contraintes d'une exploitation industrielle.

L'invention vise également à proposer une composition comprenant des particules minérales silicatées présentant des propriétés magnétiques.

L'invention vise à proposer des compositions comprenant des particules minérales phyllosilicatées présentant des propriétés magnétiques et pouvant être utilisées en remplacement de compositions de talc naturel, dans diverses applications.

Pour ce faire, l'invention concerne un procédé de préparation d'une composition, dite composition talqueuse magnétique, comprenant des particules minérales, dites particules talqueuses magnétiques, présentant une susceptibilité magnétique non nulle, dans lequel on met en contact, au cours d'une étape de mise en contact :

- des particules talqueuses choisies dans le groupe formé des silicates lamellaires 2:1 présentant une charge électrique nulle et un diamètre équivalent moyen compris entre 10 nm et 300 nm, avec
- des particules, dites particules magnétiques, comprenant au moins un oxyde de fer magnétique choisi dans le groupe formé de la magnétite et de la maghémite, lesdites particules magnétiques présentant un diamètre équivalent moyen compris entre 1 nm et 50 nm.

En effet, les inventeurs ont constaté avec surprise qu'un procédé selon l'invention dans lequel on utilise de telles particules nanométriques talqueuses et de telles particules nanométriques magnétiques permet de préparer des particules minérales présentant, notamment à la température ambiante (par exemple entre 18°C et 25°C), des propriétés magnétiques différentes de celles de silicates lamellaires 2:1 de charge nulle connus.

De façon surprenante, une simple mise en contact de particules talqueuses présentant un diamètre équivalent moyen compris entre 10 nm et 300 nm et de particules magnétiques (comprenant de la magnétite et/ou de la maghémite) présentant un diamètre équivalent moyen compris entre 1 nm et 50 nm permet d'obtenir une composition talqueuse magnétique dans laquelle les particules magnétiques et les particules talqueuse sont liées durablement les unes aux autres, sans nécessiter de mettre en oeuvre d'importants moyens techniques tel qu'un traitement thermique prolongé à haute température ou encore un broyage à haut cisaillement prolongé.

Une explication possible de l'affinité entre les particules magnétiques et les particules talqueuses serait liée à une correspondance entre la taille des particules magnétiques et la taille des particules talqueuses et en particulier l'épaisseur (ou la taille des bordures) des particules talqueuses, les inventeurs ayant observé que les particules magnétiques se fixent de préférence le long des bordures des feuillets de talc par exemple, et en particulier en formant des liaisons O-H.

Ladite étape de mise en contact (ou étape de mise en contact oxydative) entre la composition talqueuse et lesdites particules de magnétite peut être réalisée de toute façon permettant d'obtenir une composition talqueuse magnétique comprenant des particules silicatées magnétiques présentant une susceptibilité magnétique non nulle.

Les particules talqueuses et les particules magnétiques peuvent notamment être mises en contact les unes avec les autres à sec ou en solution, par exemple en solution aqueuse. Dans le cas d'une préparation en solution, les particules magnétiques peuvent être préparées préalablement à la mise en contact avec les particules talqueuses puis être mises en contact en solution avec les particules talqueuses ou, être préparées « in situ » à partir d'au moins un élément précurseur desdites particules magnétiques c'est-à-dire dans une solution comprenant les particules talqueuses.

Selon une première variante de réalisation d'un procédé selon l'invention, on réalise la mise en contact des particules talqueuses et des particules magnétiques en milieu liquide.

Avantageusement et selon l'invention, au cours de l'étape de mise en contact :

- on prépare une solution aqueuse,
- on ajoute des particules talqueuses et des particules magnétiques à la solution aqueuse, et
- on élimine la solution aqueuse.

En outre, avantageusement et selon l'invention, après avoir ajouté les particules talqueuses et les particules magnétiques à la solution aqueuse, on mélange ladite solution contenant les particules talqueuses et les particules magnétiques. Puis, on élimine la solution aqueuse par séchage.

Avantageusement et selon l'invention, après avoir réalisé une mise en contact en solution des particules talqueuses et des particules magnétiques, on sèche les particules talqueuses et les particules magnétiques, les particules magnétiques étant au contact des particules talqueuses. En particulier, avantageusement et selon l'invention, au cours de l'étape de mise en contact, on sèche les particules talqueuses et les particules de magnétite, les particules de magnétite étant au contact des particules talqueuses. En effet, les inventeurs ont constaté avec surprise qu'une telle étape de mise en contact par séchage simultané des particules talqueuses et des particules de magnétite permet d'obtenir des particules talqueuses magnétiques comprenant au moins 20 % en poids de particules talqueuses et au moins 0,5 % en poids de particules de magnétite et/ou de maghémite.

Dans un mode de réalisation préférentiel d'un procédé selon l'invention au cours de l'étape de mise en contact :

- on introduit au moins un élément précurseur desdites particules magnétiques dans une suspension aqueuse comprenant des particules talqueuses,

- on réalise une réaction de précipitation desdites particules magnétiques.

En particulier, dans un mode de réalisation préférentiel d'un procédé selon l'invention :

- on introduit au moins un élément précurseur desdites particules de magnétite dans une suspension aqueuse comprenant les particules talqueuses,
- on réalise une réaction de précipitation, dite réaction de précipitation in situ, desdites particules de magnétite, et
- on sèche les particules talqueuses et les particules de magnétite obtenues ensemble.

On peut par exemple utiliser à titre d'éléments précurseurs de particules de magnétite $Fe_3O_4$, du chlorure de fer III hexahydraté ($FeCl_3.6H_2O$) et du chlorure de fer II tétrahydraté ($FeCl_2.4H_2O$), et réaliser la réaction de précipitation des particules de magnétite $Fe_3O_4$ en ajoutant une quantité prédéterminée d'une solution aqueuse d'ammoniac.
Selon une deuxième variante de réalisation d'un procédé selon l'invention, on réalise une mise en contact des particules talqueuses et des particules magnétiques à sec.
Avantageusement et selon l'invention, au cours de l'étape de mise en contact oxydative, on réalise un co-broyage, en particulier un co-broyage à sec, des particules talqueuses et des particules magnétiques. En effet, les inventeurs ont constaté avec surprise qu'une telle étape de mise en contact (ou étape de mise en contact oxydative) par broyage simultané des particules talqueuses et des particules magnétiques, notamment des particules de magnétite et/ou de maghémite, permet d'obtenir des particules talqueuses magnétiques, notamment des particules talqueuses magnétiques comprenant au moins 20 % en poids de particules talqueuses et au moins 0,5 % en poids de particules de magnétite et/ou de maghémite. En particulier, un simple traitement mécanique ou un léger broyage, c'est-à-dire un broyage ne nécessitant pas d'importantes forces de cisaillement, suffit pour créer des interactions fortes et durables entre des particules talqueuses présentant un diamètre équivalent moyen compris entre 10 nm et 1000 nm, et notamment entre 10 nm et 300 nm, et des particules magnétiques présentant un diamètre équivalent moyen compris entre 1 nm et 50 nm.
Avantageusement et selon l'invention, lesdites particules talqueuses magnétiques, présentent une susceptibilité magnétique positive. En outre, avantageusement et selon l'invention, lesdites particules talqueuses magnétiques présentent une susceptibilité magnétique supérieure à 1, en particulier supérieure à $10^3$.
Avantageusement et selon l'invention, lesdits silicates lamellaires 2:1 présentant une charge électrique nulle sont dénués de cations interfoliaires et de molécules d'eau interfoliaires. En effet, les silicates lamellaires présentant une charge électrique nulle, ils ne possèdent pas de cations interfoliaires, autrement également appelés cations compensateurs de charge, ni de molécules d'eau interfoliaires souvent associées auxdits cations compensateurs de charge dans l'espace interfoliaire de silicates présentant une charge positive non nulle.
Avantageusement et selon l'invention, les particules talqueuses ont pour formule chimique $(Si_xGe_{1-x})_4M_3O_{10}(OH)_2$ dans laquelle :

- x est un nombre réel de l'intervalle [0 ;1], et
- M désigne au moins un métal divalent ayant pour formule $Mg_{y(1)}CO_{y(2)}Zn_{y(3)}Cu_{y(4)}Mn_{y(5)}Fe_{y(6)}Ni_{y(7)}Cr_{y(8)}$; chaque y(i) représentant un nombre réel de l'intervalle [0 ;1], et tel que $\sum_{i=1}^{8} y(i) = 1$.

Avantageusement et selon l'invention, le groupe formé des silicates lamellaires 2:1 présentant une charge nulle comprennent notamment le talc, la willemseite, la pyrophyllite et leurs mélanges. Avantageusement et selon l'invention, les particules talqueuses sont formées de talc $Si_4Mg_3O_{10}(OH)_2$.
Avantageusement et selon l'invention, les particules magnétiques, notamment les particules de magnétite, présentent un diamètre équivalent moyen compris entre 1 nm et 50 nm, notamment entre 1 nm et 30 nm, en particulier entre 1 nm et 15 nm, et plus particulièrement entre 5 nm et 10 nm.
Les particules talqueuses choisies dans le groupe formé des silicates lamellaires 2:1 présentant une charge nulle utilisées dans un procédé selon l'invention peuvent être d'origine naturelle ou synthétique. Avantageusement et selon l'invention, les particules talqueuses choisies dans le groupe formé des silicates lamellaires 2:1 présentant une charge nulle sont synthétiques.
Avantageusement et selon l'invention, les particules talqueuses présentent un diamètre équivalent moyen compris entre 10 nm et 1000 nm, en particulier entre 10 nm et 300 nm et plus particulièrement entre 20 nm et 200 nm.
Dans tout le texte, on désigne par « épaisseur » des particules talqueuses la plus petite dimension desdites particules, soit la dimension desdites particules selon la direction c du réseau cristallin desdites particules talqueuses.
Dans tout le texte, on désigne par « plus grande dimension » des particules talqueuses, la dimension la plus grande desdites particules dans le plan (a, b) du réseau cristallin desdites particules talqueuses.

L'épaisseur et la plus grande dimension des particules talqueuses sont mesurées par observation par microscopie électronique à balayage (MEB) ou par microscopie électronique en transmission (MET).

Avantageusement et selon l'invention, lesdites particules talqueuses présentent une épaisseur comprise entre 1 nm et 30 nm, en particulier entre 5 nm et 20 nm, par exemple de l'ordre de 10 nm. Avantageusement et selon l'invention, la plus grande dimension des particules talqueuses est comprise entre 10 nm et 400 nm, en particulier entre 20 nm et 300 nm et plus particulièrement entre 20 nm et 200 nm.

Tout type de particules talqueuses peut être utilisé dans un procédé selon l'invention. Avantageusement et selon l'invention, les particules talqueuses peuvent être préparées par traitement hydrothermal d'un hydrogel précurseur desdites particules minérales qui est un gel silico/germano-métallique $(Si_xGe_{1-x})_4M_3O_{11}$, n'$H_2O$,

- M désignant au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque

  y(i) représentant un nombre réel de l'intervalle [0 ;1], et tel que $\sum_{i=1}^{8} y(i) = 1$, et

- x étant un nombre réel de l'intervalle [0 ;1],
- n' étant relatif à un nombre de molécule(s) d'eau associée(s) audit gel silico/germano-métallique.

Le traitement hydrothermal du gel silico/germano-métallique peut être réalisé en milieu aqueux, éventuellement en présence d'au moins un sel carboxylate permettant d'améliorer le traitement hydrothermal, notamment en permettant de diminuer sa durée. Avantageusement et selon l'invention, le traitement hydrothermal du gel silico/germano-métallique est réalisé en présence d'au moins un sel carboxylate de formule $R_2$-COOM', M' désignant un métal choisi dans le groupe formé de Na et K, et $R_1$ et $R_2$ étant chacun choisi parmi H et les groupements alkyles comprenant moins de 5 atomes de carbone.

Avantageusement et selon l'invention, au cours de l'étape de mise en contact, on met en contact les particules talqueuses avec les particules magnétiques, par exemples les particules de magnétite et/ou de maghémite, de façon à ce que le rapport massique entre les particules magnétiques et les particules talqueuses est compris entre 0,005 et 4. De cette façon, il est possible de préparer des particules talqueuses magnétiques présentant une susceptibilité magnétique non nulle comprenant 20 % à 99,5 % en poids de particules talqueuses, et 0,5 % à 80 % en poids de particules d'oxyde de fer magnétique, c'est-à-dire de magnétite et également ou non de maghémite.

L'invention s'étend à une composition, dite composition talqueuse magnétique, comprenant des particules minérales, dites particules talqueuses magnétiques, présentant une susceptibilité magnétique non nulle, lesdites particules talqueuses magnétiques comprenant au moins 20 % en poids de particules talqueuses choisies dans le groupe formé des silicates lamellaires 2:1 présentant une charge électrique nulle et au moins 0,5 % en poids de particules de maghémite par rapport au poids total de ladite composition talqueuse magnétique.

L'invention s'étend également à une composition, dite composition talqueuse magnétique, comprenant des particules minérales, dites particules talqueuses magnétiques, présentant une susceptibilité magnétique non nulle, lesdites particules talqueuses magnétiques comprenant :

- au moins 20 % en poids de particules talqueuses par rapport au poids total de ladite composition talqueuse magnétique, lesdites particules talqueuses étant choisies dans le groupe formé des silicates lamellaires 2:1 présentant une charge électrique nulle et un diamètre équivalent moyen compris entre 10 nm et 300 nm, et
- au moins 0,5 % en poids de particules, dites particules magnétiques, comprenant au moins un oxyde de fer magnétique choisi dans le groupe formé de la magnétite et de la maghémite, par rapport au poids total de ladite composition talqueuse magnétique, lesdites particules magnétiques présentant un diamètre équivalent moyen compris entre 1 nm et 50.

Ainsi, une composition selon l'invention comprend des particules talqueuses et des particules magnétiques, telles que des particules de magnétite et/ou de maghémite, au moins partiellement liées les unes avec les autres de façon à former une composition talqueuse magnétique comprenant des particules talqueuses magnétiques, présentant une susceptibilité magnétique non nulle.

Il est possible de vérifier la présence de magnétite ou de maghémite dans les particules talqueuses magnétiques ainsi formées par diffraction des rayons X ou par spectroscopie IR ou Raman (la magnétite présentant notamment des bandes caractéristiques entre 570 et 590 cm$^{-1}$ et la maghémite présentant également des bandes caractéristiques vers 730 cm$^{-1}$, 695 cm$^{-1}$, 630 cm$^{-1}$, 590 cm$^{-1}$, 560 cm$^{-1}$, 480 cm$^{-1}$ et 440 cm$^{-1}$). En outre, il est possible de vérifier la présence de magnétite et/ou de maghémite dans les particules talqueuses magnétiques ainsi que la proportion de magnétite et la proportion de maghémite par spectroscopie Mössbauer ou encore selon la technique dite «SQUID».

Avantageusement et selon l'invention, lesdites particules talqueuses magnétiques présentent une susceptibilité magnétique positive.

Avantageusement et selon l'invention, une composition talqueuse magnétique selon l'invention est préparée par un procédé selon l'invention.

En particulier, avantageusement et selon l'invention, une composition talqueuse magnétique selon l'invention présente des propriétés ferrimagnétiques. Avantageusement et selon l'invention, une telle composition comprend des particules talqueuses magnétiques présentant des propriétés ferrimagnétiques.

L'invention concerne aussi un procédé de préparation d'une composition talqueuse magnétique et une composition talqueuse magnétique caractérisés en combinaison par tout ou partie des caractéristiques mentionnées ci-dessus ou ci-après.

D'autres buts, avantages et caractéristiques de l'invention apparaissent à la lecture de la description et des exemples qui suivent.

Dans un premier mode de réalisation d'un procédé selon l'invention, on prépare les particules talqueuses par traitement hydrothermal d'un hydrogel précurseur desdites particules talqueuses, en particulier d'un gel silico/germano-métallique.

1/ - Préparation d'un gel silico/germano-métallique

Ainsi, dans une première variante de réalisation du premier mode de réalisation d'un procédé selon l'invention, le gel silico/germano-métallique est préparé par une coprécipitation selon l'équation de réaction suivante :

$$4 \begin{pmatrix} (Na_2OSiO_2)_x \\ (Na_2OGeO_2)_{1-x} \end{pmatrix} + 2HCl + mH_2O + 3 \begin{pmatrix} y_{(1)}(MgCl_2) + y_{(2)}(CoCl_2) + y_{(3)}(ZnCl_2) \\ + y_{(4)}(CuCl_2) + y_{(5)}(MnCl_2) + y_{(6)}(FeCl_2) \\ + y_{(7)}(NiCl_2) + y_{(8)}(CrCl_2) \end{pmatrix}$$

$$\longrightarrow \quad [(Si_xGe_{1-x})_4M_3O_{11}, n'H_2O] + 8NaCl + (m-n'+1)H_2O$$

- m, n' et (m-n'+1) étant des nombres entiers positifs,
- M désignant au moins un métal divalent ayant pour formule $Mg_{y(1)}CO_{y(2)}Zn_{y(3)}Cu_{y(4)}Mn_{y(5)}Fe_{y(6)}Ni_{y(7)}Cr_{y(8)}$; chaque $y(i)$ représentant un nombre réel de l'intervalle [0;1], et tel que $\sum_{i=1}^{8} y(i) = 1$.
- x étant un nombre réel de l'intervalle [0;1],
- n' étant relatif à un nombre de molécule(s) d'eau associée(s) audit gel silico/germano-métallique.

Cette réaction de coprécipitation permet d'obtenir un gel silico/germano-métallique hydraté ayant la stoechiométrie du talc (4 Si/Ge pour 3 M). Elle est mise en oeuvre à partir de :

1. une solution aqueuse de métasilicate de sodium pentahydraté ou une solution aqueuse de métagermanate de sodium hydraté, ou un mélange de ces deux solutions dans les proportions molaires x:(1-x),
2. une solution de chlorure de métal, préparée avec un ou plusieurs sels de métal (sous leur(s) forme(s) hydratée(s) ou non) dilué(s) dans de l'eau distillée, et
3. une solution d'acide chlorhydrique 1N.

La préparation du gel silico/germano-métallique est réalisée en suivant le protocole suivant :

1. on mélange les solutions d'acide chlorhydrique et la solution de chlorure de métal (ou de métaux),
2. on ajoute ce mélange à la solution de métasilicate et/ou de métagermanate de sodium ; le gel de coprécipitation se forme instantanément,
3. on récupère le gel après centrifugation (entre 3000 et 7000 tours/min, pendant 5 à 20 minutes, par exemple 3500 tours par minute pendant 15 minutes) et élimination du surnageant (solution de chlorure de sodium formée),
4. on lave le gel avec de l'eau, en particulier avec de l'eau distillée ou osmosée, en effectuant au moins deux cycles de lavage/centrifugation

5. on récupère le gel après centrifugation.

A l'issue de cette première phase, on obtient un gel silico/germano-métallique $(Si_xGe_{1-x})_4M_3O_{11}$, n'$H_2O$ hydraté et de consistance gélatineuse. Ce gel présente un comportement thixotropique, c'est-à-dire qu'il passe d'un état visqueux à un état liquide lorsqu'on l'agite, puis retrouve son état initial si on le laisse au repos pendant un temps suffisant.

Dans une deuxième variante de réalisation du premier mode de réalisation d'un procédé selon l'invention, le gel silico/germano-métallique est préparé par une réaction de coprécipitation impliquant, à titre de réactif, au moins un composé comprenant du silicium, au moins un sel dicarboxylate de formule $M(R_1-COO)_2$ en présence d'au moins un sel carboxylate de formule $R_2$-COOM', M' désignant un métal choisi dans le groupe formé de Na et K, et $R_1$ et $R_2$ étant chacun choisi parmi H et les groupements alkyles comprenant moins de 5 atomes de carbone.

Cette réaction de coprécipitation permet d'obtenir un gel silico/germano-métallique hydraté ayant la stoechiométrie du talc (4 Si pour 3 M, M ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque $y(i)$ 8 représentant un nombre réel de l'intervalle [0;1], et tel que $\sum_{i=1}^{8} y(i) = 1$).

Le gel silico/germano-métallique est préparé par une réaction de coprécipitation mise en oeuvre à partir de :

1. une solution aqueuse de métasilicate de sodium pentahydraté ou une solution aqueuse de métagermanate de sodium hydraté, ou un mélange de ces deux solutions dans les proportions molaires x:(1-x),
2. une solution de sel(s) dicarboxylate(s), préparée avec un ou plusieurs sel(s) dicarboxylate(s) de formule(s) M(R1-COO)2 dilué(s) dans un acide carboxylique, tel que l'acide acétique, et
3. une solution de sel(s) carboxylate(s), préparée avec un ou plusieurs sel(s) carboxylate(s) de formule(s) R2-COOM' dilué(s) dans de l'eau distillée.

La préparation de cet hydrogel précurseur est réalisée en suivant le protocole suivant :

1. on mélange les solutions de métasilicate de sodium et de sel(s) carboxylate(s) de formule(s) $R_2$-COOM',
2. on y ajoute rapidement la solution de sel(s) dicarboxylate(s) de formule(s) $M(R_1-COO)_2$; l'hydrogel de coprécipi-tation se forme instantanément.

En outre, il est possible de soumettre le milieu de préparation dudit hydrogel aux ultrasons.

A l'issue de cette précipitation on obtient un gel silico/ germano-métallique $(Si_xGe_{1-x})_4M_3O_{11}$, n'$H_2O$ dans une solution aqueuse de sel(s) carboxylate(s) ledit hydrogel étant fortement hydraté et présentant une consistance plus ou moins gélatineuse.

Le gel silico/germano-métallique $(Si_xGe_{1-x})_4M_3O_{11}$, n'$H_2O$ obtenu, en présence du ou des sel(s) carboxylate(s) de formule(s) $R_2$-COOM' et $R_1$-COOM', est ainsi prêt à être directement soumis à un traitement hydrothermal.

L'hydrogel peut également être récupéré après centrifugation (par exemple entre 3000 et 15 000 tours par minute, pendant 5 à 60 minutes) et élimination du surnageant (solution de sel(s) carboxylate(s)), éventuellement lavage à l'eau déminéralisée (par exemples deux lavages et centrifugations successifs) puis séchage, par exemple dans une étuve (60°C, 2 jours), par lyophilisation, par séchage par atomisation ou encore par séchage sous irradiation de micro-ondes. Les particules silico/germano-métalliques de formule $(Si_xGe_{1-x})_4M_3O_{11}$, n'$H_2O$ peuvent ainsi être stockées sous la forme d'une poudre (en présence ou non du ou des sel(s) carboxylate(s) selon qu'un lavage à l'eau a été effectué ou non) en vue d'un traitement hydrothermal ultérieur.

2/ - Traitement hydrothermal du gel silico/germano-métallique

Le gel silico/germano-métallique tel que précédemment obtenu est soumis à un traitement hydrothermal, à une température comprise entre 100°C et 400°C, pendant une durée comprise entre 30 minutes et 60 jours, notamment entre 1 heure et 10 jours, en particulier entre 1 heure et 10 heures.
Le gel silico/germano-métallique obtenu par précipitation peut également d'abord être séché à l'étuve à 60°C, par exemple pendant deux jours, avant d'être soumis à un traitement hydrothermal.

Pour procéder au traitement hydrothermal:

1. on place le gel, sous forme liquéfiée, dans un réacteur,
2. on ajoute éventuellement sous agitation une solution comprenant au moins un sel carboxylate de formule $R_2$-COOM' audit gel, M' désignant un métal choisi dans le groupe formé de Na et K, et $R_2$ étant choisi parmi H et les groupements alkyles comprenant moins de 5 atomes de carbone (sous une forme hydratée ou anhydre),

3. on ajuste éventuellement le rapport liquide/solide à une valeur comprise entre 2 et 20, notamment entre 5 et 15 (la quantité de liquide étant exprimée en $cm^3$, et la quantité de solide, en grammes),

4. on place le réacteur/autoclave à l'intérieur d'une étuve, à une température de réaction prédéterminée (établie entre 100°C et 400°C), pendant toute la durée du traitement.

Dans la première variante de réalisation d'un procédé selon l'invention, à l'issue de ce traitement hydrothermal, on obtient une composition talqueuse colloïdale comprenant des particules talqueuses appartenant au groupe des phyllosilicates 2:1 de charge nulle en solution dans l'eau. Les particules talqueuses peuvent être récupérées par centrifugation et élimination du surnageant.

Dans la deuxième variante de réalisation d'un procédé selon l'invention, à l'issue de ce traitement hydrothermal, on obtient des particules talqueuses en suspension dans une solution aqueuse de sel(s) carboxylate(s). Au terme de ce traitement hydrothermal, les particules talqueuses contenues dans le réacteur sont récupérées par centrifugation (entre 3000 et 15 000 tours par minute, pendant 5 à 60 minutes) puis élimination du surnageant. La composition comprenant des particules talqueuses récupérée est ensuite, de préférence, lavée avec de l'eau, en particulier avec de l'eau distillée ou osmosée, en effectuant au moins deux cycles de lavage/centrifugation.

Dans chacune des deux variantes de réalisation d'un procédé selon l'invention décrites ci-dessus, la composition comprenant des particules talqueuses récupérée après la dernière centrifugation peut ensuite être séchée :

- à l'étuve à une température comprise entre 60°C et 130°C, pendant 1 à 24 heures, ou encore,
- par lyophilisation, par exemple dans un lyophilisateur de type CHRIST ALPHA® 1-2 LD Plus, pendant 48 heures à 72 heures,
- ou encore par atomisation.

Au terme d'un tel traitement hydrothermal, on obtient, après séchage, une composition solide divisée comprenant des particules de formule $(Si_xGe_{1-x})_4M_3O_{10}(OH)_2$, en particulier des particules de talc de formule $Si_4Mg_3O_{10}(OH)_2$.

3/ - Mise en contact pour la préparation d'une composition talqueuse magnétique

Une composition talqueuse comprenant des particules talqueuses telle que précédemment obtenue est mise en contact avec des particules de magnétite dans des conditions propres à oxyder au moins partiellement lesdites particules de magnétite en maghémite.

Les nanoparticules de magnétite formées par synthèse peuvent être non stoechiométriques (stoechiométrie en oxygène et/ou en lacunes cationiques). La formule chimique d'une magnétite s'écrit $(Fe^{3+})_A[Fe^{2+} + Fe^{3+}]_B 4O^{2-}$. L'oxydation des $Fe^{2+}$ en $Fe^{3+}$ (sur le site B) s'accompagne de la formation de lacunes et donne la formule générale suivante: $(Fe^{3+})_A[Fe^{2+}_{1-3\delta} + Fe^{3+}_{1+2\delta}\delta]_BO4$. Cette oxydation peut dans certains cas aller jusqu'à la formation de maghémite (absence totale de $F_e^{2+}$).

La vérification de cette non stoechiométrie se fait par diffraction des rayons X. D'après la courbe de Yang et al. (« Magnetic and structural studies of the Verwey transition in Fe3-δO4 nanoparticles » Journal de Physique Appliquée, Volume 95, numéro 11, 1er juin 2004) qui donne la variation du paramètre de maille en fonction de la déviation à la stoechiométrie δ dans la magnétite $Fe_{3-\delta}O_4$. On peut par exemple utiliser des particules de magnétite de formule suivante: $Fe_{2,72\pm0.01}O_4$ ou encore $Fe_{2,86\pm0.01}O_4$. Cette déviation en stoechiométrie est attribuée à une oxydation en surface des ions $Fe^{2+}$.

Les particules talqueuses et les particules de magnétite peuvent être mises en contact à sec ou en solution. Dans le cas d'une telle préparation en solution, les particules de magnétite peuvent être préparées préalablement à la mise en contact avec les particules talqueuses puis être mises en contact en solution avec les particules talqueuses ou, être préparées « in situ » à partir d'au moins un élément précurseur desdites particules de magnétite c'est-à-dire dans une solution comprenant les particules talqueuses.

Dans le cas d'une mise en contact en solution des particules talqueuses et des particules de magnétite, la suspension obtenue est alors centrifugée de façon à séparer les particules talqueuses magnétiques, de la solution surnageante.

La composition talqueuse magnétique récupérée peut en outre éventuellement être lavée avec de l'eau, en particulier avec de l'eau distillée ou osmosée, en effectuant un ou plusieurs cycle(s) de lavage/centrifugation.

La composition talqueuse magnétique récupérée après la dernière centrifugation peut alors être séchée, notamment à l'étuve, par lyophilisation, ou encore par atomisation.

On obtient ainsi une composition talqueuse magnétique comprenant des particules de formule $(Si_xGe_{1-x})_4M_3O_{10}(OH)_2$, en particulier des particules de talc $Si_4M_3O_{10}(OH)_2$, associées à des particules de maghémite (et éventuellement à des particules de magnétite).

EXEMPLE 1

On prépare un gel silico-métallique de formule $Si_4Mg_3O_{11}$, n'$H_2O$ et on le soumet à un traitement hydrothermal pendant 6 heures à une température de 300 °C. On obtient ainsi du talc synthétique.

D'une part, on prépare une suspension de talc synthétique par mélange sous agitation magnétique de 20 g d'une suspension aqueuse (sous forme de gel) comprenant des particules de talc dont le taux d'humidité est de 90 % (soit 10% en poids de talc sec par rapport au poids total dé ladite suspension) dans 70 ml d'eau distillée. Les particules de talc présentent un diamètre équivalent moyen compris entre 20 nm et 100 nm, et en particulier une épaisseur de l'ordre de 10 nm à 20 nm et une plus grande dimension (ou longueur des particules) de l'ordre de 200 nm.

D'autre part, on prépare une solution aqueuse de chlorures de fer par dissolution sous agitation magnétique de 10,81 g de chlorure de fer III hexahydraté ($FeCl_3.6H_2O$) et de 3,98 g de chlorure de fer II tétrahydraté ($FeCl_2.4H_2O$) dans 200 ml d'eau distillée. On réalise ensuite un jaugeage de la solution avec de l'eau distillée jusqu'à 250 ml.

On ajoute sous agitation magnétique 54 ml de la solution aqueuse de chlorures de fer à la suspension de talc synthétique, soit l'équivalent de 50% en poids de magnétite $Fe_3O_4$ par rapport au talc. La solution obtenue présente une coloration jaune.

On ajoute ensuite, sous agitation magnétique, 3 à 5 ml d'ammoniac en solution aqueuse à 30%. Des particules de magnétite se forment alors par précipitation et la suspension prend une coloration noire. Les particules magnétiques présentent un diamètre équivalent moyen compris entre 5 nm et 30 nm.

Après 5 à 10 minutes sous agitation magnétique, la suspension obtenue est centrifugée de façon à séparer les particules comprenant du talc et de la magnétite $Fe_3O_4$, d'une solution surnageante de chlorure d'ammonium. Les particules ainsi obtenues sont séchées par lyophilisation.

Après séchage, on obtient une composition talqueuse magnétique comprenant des particules talqueuses magnétiques comprenant 66,6 % en poids de talc et 33,4 % en poids de particules d'oxyde de fer magnétique (c'est-à-dire des particules de magnétite $Fe_3O_4$ et plus de 0,5 % en poids de particules de maghémite $\gamma$- $Fe_2O_3$) par rapport au poids total de la composition talqueuse magnétique.

Lorsqu'on dispose quelques grammes de cette composition comprenant des particules talqueuses magnétiques dans un récipient fermé en plastique transparent, et qu'on approche un aimant du fond du récipient et qu'on retourne le récipient, on observe que les particules talqueuses magnétiques ne retombent pas mais restent attirées par l'aimant.

En outre, la composition comprenant des particules minérales magnétiques obtenue présente une coloration marron foncé.

EXEMPLE 2

On prépare un gel silico-métallique de formule $Si_4Mg_3O_{11}$, n'$H_2O$ et on le soumet à un traitement hydrothermal pendant 6 heures à une température de 300 °C. On obtient ainsi du talc synthétique.

D'une part, on prépare une suspension de talc synthétique par mélange sous agitation magnétique de 10 g d'une suspension aqueuse (sous forme de gel) comprenant des particules de talc dont le taux d'humidité est de 90 % (soit 10% en poids de talc sec par rapport au poids total de ladite suspension) dans 70 ml d'eau distillée. Les particules de talc présentent un diamètre équivalent moyen compris entre 20 nm et 100 nm, et en particulier une épaisseur de l'ordre de 10 nm à 20 nm et une plus grande dimension (ou longueur des particules) de l'ordre de 200 nm.

D'autre part, on prépare une solution aqueuse de chlorures de fer par dissolution sous agitation magnétique de 5,36 g de chlorure de fer III hexahydraté ($FeCl_3.6H_2O$) et de 1,98 g de chlorure de fer II tétrahydraté ($FeCl_2.4H_2O$) dans 100 ml d'eau distillée. La solution aqueuse de chlorures de fer est maintenue sous agitation magnétique et avec un bullage d'azote pendant qu'elle est portée à 85°C.

On ajoute alors sous agitation magnétique 12 ml d'ammoniac en solution aqueuse à 30%. Des particules de magnétite se forment alors par précipitation et la suspension prend une coloration noire.

Après 5 à 10 minutes sous agitation magnétique, la suspension d'oxyde de fer magnétique obtenue est centrifugée de façon à séparer les particules de magnétite $Fe_3O_4$, et de maghémite $\gamma$- $Fe_2O_3$ d'une solution surnageante contenant du chlorure d'ammonium et l'excès d'ammoniac. La composition d'oxyde de fer magnétique récupérée est lavée une fois à l'eau distillée puis à nouveau centrifugée. Chaque centrifugation est réalisée à 10 000 tours/min pendant 40 minutes. On obtient une composition d'oxyde de fer magnétique à laquelle on ajoute 400 ml d'eau distillée et que l'on soumet aux ultrasons pendant 1 heure. Les particules magnétiques présentent un diamètre équivalent moyen compris entre 5 nm et 30 nm.

On ajoute sous agitation magnétique 34,48 ml de la solution aqueuse d'oxyde de fer magnétique préparée à la suspension de talc synthétique, soit l'équivalent de 20% en poids d'oxyde de fer magnétique par rapport au talc. On maintient la suspension obtenue sous agitation magnétique pendant 10 minutes à température ambiante (25°C).

Après séchage, on obtient une composition talqueuse magnétique en suspension comprenant des particules talqueuses magnétiques présentant une susceptibilité magnétique positive et comprenant 83,4 % en poids de talc et 16,6 % en poids de particules d'oxyde de fer magnétique (c'est-à-dire des particules de magnétite $Fe_3O_4$ et plus de 0,5 % en poids de particules de maghémite $\gamma$- $Fe_2O_3$) par rapport au poids total de la composition talqueuse magnétique.

EXEMPLE 3

On prépare un gel silico-métallique de formule $Si_4Mg_3O_{11}$, n'$H_2O$ et on le soumet à un traitement hydrothermal pendant 6 heures à une température de 300 °C. On obtient ainsi du talc synthétique.

D'une part, on prépare une composition de talc synthétique constituée d'1 g de talc obtenu par séchage d'une suspension aqueuse récupérée après traitement hydrothermal. Les particules de talc présentent un diamètre équivalent moyen compris entre 20 nm et 100 nm, et en particulier une épaisseur de l'ordre de 10 nm à 20 nm et une plus grande dimension (ou longueur des particules) de l'ordre de 200 nm.

D'autre part, on prépare une solution aqueuse de chlorures de fer par dissolution sous agitation magnétique de 5,36 g de chlorure de fer III hexahydraté ($FeCl_3.6H_2O$) et de 1,98 g de chlorure de fer II tétrahydraté ($FeCl_2.4H_2O$) dans 100 ml d'eau distillée. La solution aqueuse de chlorures de fer est maintenue sous agitation magnétique et avec un bullage d'azote pendant qu'elle portée à 85°C.

On ajoute alors sous agitation magnétique 12 ml d'ammoniac en solution aqueuse à 30%. Des particules de magnétite se forment alors par précipitation et la suspension prend une coloration noire. Les particules magnétiques présentent un diamètre équivalent moyen compris entre 5 nm et 30 nm.

Après 5 à 10 minutes sous agitation magnétique, la suspension d'oxyde de fer magnétique obtenue est centrifugée de façon à séparer les particules de magnétite $Fe_3O_4$, et de maghémite $\gamma$- $Fe_2O_3$ d'une solution surnageante contenant du chlorure d'ammonium et l'excès d'ammoniac. Les particules d'oxyde de fer magnétique récupérées sont lavées une fois à l'eau distillée puis à nouveau centrifugées. Chaque centrifugation est réalisée à 10 000 tours/min pendant 40 minutes. On sèche ensuite les particules d'oxyde de fer magnétique récupérées.

On mélange ensuite à sec dans un mortier en agate 0,2 g de particules d'oxyde de fer magnétique avec la composition de talc pendant 2 minutes. On met ainsi en contact l'équivalent de 20% en poids d'oxyde de fer magnétique par rapport au talc.

On obtient une composition comprenant des particules talqueuses magnétiques présentant une susceptibilité magnétique positive et comprenant 83,4 % en poids de talc et 16,6 % en poids de particules d'oxyde de fer magnétique (c'est-à-dire des particules de magnétite $Fe_3O_4$ et plus de 0,5 % en poids de particules de maghémite $\gamma$- $Fe_2O_3$) par rapport au poids total de la composition talqueuse magnétique.

**Revendications**

1.  - Procédé de préparation d'une composition, dite composition talqueuse magnétique, comprenant des particules minérales, dites particules talqueuses magnétiques, présentant une susceptibilité magnétique non nulle, dans lequel on met en contact, au cours d'une étape de mise en contact :

    - des particules talqueuses choisies dans le groupe formé des silicates lamellaires 2:1 présentant une charge électrique nulle et un diamètre équivalent moyen compris entre 10 nm et 300 nm, avec
    - des particules, dites particules magnétiques, comprenant au moins un oxyde de fer magnétique choisi dans le groupe formé de la magnétite et de la maghémite, lesdites particules magnétiques présentant un diamètre équivalent moyen compris entre 1 nm et 50 nm.

2.  - Procédé selon la revendication 1, **caractérisé en ce qu'**on réalise la mise en contact des particules talqueuses et des particules magnétiques en milieu liquide.

3.  - Procédé selon l'une des revendications 1 ou 2, **caractérisé en ce qu'**au cours de l'étape de mise en contact :

    - on prépare une solution aqueuse,
    - on ajoute des particules talqueuses et des particules magnétiques à la solution aqueuse, et
    - on élimine la solution aqueuse.

4.  - Procédé selon l'une des revendications 1 à 3, **caractérisé en ce qu'**au cours de l'étape de mise en contact :

    - on introduit au moins un élément précurseur desdites particules magnétiques dans une suspension aqueuse comprenant des particules talqueuses,
    - on réalise une réaction de précipitation desdites particules magnétiques.

**5.** - Procédé selon l'une des revendications 1 à 4, **caractérisé en ce qu'**au cours de l'étape de mise en contact, on sèche les particules talqueuses et les particules magnétiques, les particules magnétiques étant au contact des particules talqueuses.

**6.** - Procédé selon la revendication 1, **caractérisé en ce qu'**au cours de l'étape de mise en contact, on réalise un co-broyage à sec des particules talqueuses et des particules magnétiques.

**7.** - Procédé selon l'une des revendications 1 à 6, **caractérisé en ce que** les silicates lamellaires 2:1 présentant une charge électrique nulle sont dénués de cations interfoliaires et de molécules d'eau interfoliaires.

**8.** - Procédé selon l'une des revendications 1 à 7, **caractérisé en ce que** les particules talqueuses ont pour formule chimique $(Si_xGe_{1-x})_4M_3O_{10}(OH)_2$ dans laquelle :

- x est un nombre réel de l'intervalle [0;1], et
- M désigne au moins un métal divalent ayant pour formule $Mg_{y(1)}CO_{y(2)}Zn_{y(3)}Cu_{y(4)}Mn_{y(5)}Fe_{y(6)}Ni_{y(7)}Cr_{y(8)}$;

chaque $y(i)$ représentant un nombre réel de l'intervalle [0;1], et tel que $\sum_{i=1}^{8} y(i) = 1$.

**9.** - Procédé selon l'une des revendications 1 à 8, **caractérisé en ce que** les particules talqueuses sont formées de talc $Si_4Mg_3O_{10}(OH)_2$.

**10.** - Procédé selon l'une des revendications 1 à 9, **caractérisé en ce que** lesdites particules magnétiques présentent un diamètre équivalent moyen compris entre 1 nm et 30 nm.

**11.** - Procédé selon l'une des revendications 1 à 10, **caractérisé en ce que** lesdites particules talqueuses présentent un diamètre équivalent moyen compris entre 10 nm et 200 nm.

**12.** - Procédé selon l'une des revendications 1 à 11, **caractérisé en ce qu'**au cours de l'étape de mise en contact, on met en contact les particules talqueuses avec les particules magnétiques de façon à ce que le rapport massique entre les particules magnétiques et les particules talqueuses est compris entre 0,005 et 4.

**13.** - Composition, dite composition talqueuse magnétique, comprenant des particules minérales, dites particules talqueuses magnétiques, présentant une susceptibilité magnétique non nulle, lesdites particules talqueuses magnétiques comprenant :

- au moins 20 % en poids de particules talqueuses par rapport au poids total de ladite composition talqueuse magnétique, lesdites particules talqueuses étant choisies dans le groupe formé des silicates lamellaires 2:1 présentant une charge électrique nulle et un diamètre équivalent moyen compris entre 10 nm et 300 nm, et
- au moins 0,5 % en poids de particules, dites particules magnétiques, comprenant au moins un oxyde de fer magnétique choisi dans le groupe formé de la magnétite et de la maghémite, par rapport au poids total de ladite composition talqueuse magnétique, lesdites particules magnétiques présentant un diamètre équivalent moyen compris entre 1 nm et 50 nm.

**14.** - Composition selon la revendication 13, **caractérisé en ce que** lesdites particules talqueuses magnétiques présentent une susceptibilité magnétique positive.

**15.** - Composition selon l'une des revendications 13 et 14, **caractérisé en ce qu'**elle comprend au moins 0,5 % en poids de particules de maghémite.

**Patentansprüche**

**1.** Verfahren zur Herstellung einer Zusammensetzung, als magnetische Talk-Zusammensetzung bezeichnet, die mineralische Partikel, als magnetische Talkpartikel bezeichnet, umfasst, die eine magnetische Suszeptibilität von ungleich Null aufweisen, wobei im Laufe eines Schrittes des Inkontaktbringens in Kontakt gebracht werden:

- Talkpartikel, ausgewählt aus der Gruppe, die von 2:1-Schichtsilikaten gebildet wird, die eine elektrische Ladung von Null und einen mittleren Äquivalentdurchmesser von zwischen 10 nm und 300 nm aufweisen, mit
- Partikeln, als magnetische Partikel bezeichnet, die mindestens ein magnetisches Eisenoxid umfassen, ausgewählt aus der Gruppe, die von Magnetit und Maghemit gebildet wird, wobei die besagten magnetischen Partikel einen mittleren Äquivalentdurchmesser von zwischen 1 nm und 50 nm aufweisen.

2. Verfahren nach Anspruch 1, **dadurch gekennzeichnet, dass** das Inkontaktbringen der Talkpartikel und der magnetischen Partikel in flüssigem Medium vorgenommen wird.

3. Verfahren nach einem der Ansprüche 1 oder 2, **dadurch gekennzeichnet, dass** im Laufe des Schrittes des Inkontaktbringens:

   - eine wässrige Lösung hergestellt wird,
   - Talkpartikel und magnetische Partikel der wässrigen Lösung hinzugefügt werden, und
   - die wässrige Lösung entfernt wird.

4. Verfahren nach einem der Ansprüche 1 bis 3, **dadurch gekennzeichnet, dass** im Laufe des Schrittes des Inkontaktbringens:

   - mindestens ein Vorläuferelement der besagten magnetischen Partikel in eine wässrige Suspension eingebracht wird, die Talkpartikel umfasst,
   - eine Fällungsreaktion der besagten magnetischen Partikel vorgenommen wird.

5. Verfahren nach einem der Ansprüche 1 bis 4, **dadurch gekennzeichnet, dass** im Laufe des Schrittes des Inkontaktbringens die Talkpartikel und die magnetischen Partikel getrocknet werden, wobei die magnetischen Partikel mit den Talkpartikeln in Kontakt sind.

6. Verfahren nach Anspruch 1, **dadurch gekennzeichnet, dass** im Laufe des Schrittes des Inkontaktbringens ein gemeinsames Vermahlen in trockenem Zustand der Talkpartikel und der magnetischen Partikel vorgenommen wird.

7. Verfahren nach einem der Ansprüche 1 bis 6, **dadurch gekennzeichnet, dass** die 2:1-Schichtsilikate, die eine elektrische Ladung von Null aufweisen, frei sind von Zwischenschicht-Kationen und Zwischenschicht-Wassermolekülen.

8. Verfahren nach einem der Ansprüche 1 bis 7, **dadurch gekennzeichnet, dass** die Talkpartikel die chemische Formel $(Si_xGe_{1-x})_4M_3O_{10}(OH)_2$ besitzer, wobei:

   - x eine reelle Zahl aus dem Bereich [0; 1] ist, und
   - M mindestens ein zweiwertiges Metall bezeichnet, das die Formel $Mg_{y(1)}CO_{y(2)}Zn_{y(3)}CU_{y(4)}Mn_{y(5)}Fe_{y(6)}Ni_{y(7)}Cr_{y(8)}$ besitzt; wobei jedes y(i) eine reelle Zahl aus dem Bereich [0;

   1] darstellt, und so, dass $\sum_{i=1}^{8} y(i) = 1$ .

9. Verfahren nach einem der Ansprüche 1 bis 8, **dadurch gekennzeichnet, dass** die Talkpartikel aus $Si_4Mg_3O_{10}(OH)_2$-Talk gebildet sind.

10. Verfahren nach einem der Ansprüche 1 bis 9, **dadurch gekennzeichnet, dass** die besagten magnetischen Partikel einen mittleren Äquivalentdurchmesser von zwischen 1 nm und 30 nm aufweisen.

11. Verfahren nach einem der Ansprüche 1 bis 10, **dadurch gekennzeichnet, dass** die besagten Talkpartikel einen mittleren Äquivalentdurchmesser von zwischen 10 nm und 200 nm aufweisen.

12. Verfahren nach einem der Ansprüche 1 bis 11, **dadurch gekennzeichnet, dass** im Laufe des Schrittes des Inkontaktbringens die Talkpartikel mit den magnetischen Partikeln derart in Kontakt gebracht werden, dass das Massenverhältnis zwischen den magnetischen Partikeln und den Talkpartikeln zwischen 0,005 und 4 liegt.

**13.** Zusammensetzung, als magnetische Talk-Zusammensetzung bezeichnet, die mineralische Partikel, als magnetische Talkpartikel bezeichnet, umfasst, die eine magnetische Suszeptibilität von ungleich Null aufweisen, wobei die besagten magnetischen Talkpartikel umfassen:

- mindestens 20 Gew.-% Talkpartikel im Verhältnis zum Gesamtgewicht der besagten magnetischen Talk-Zusammensetzung, wobei die Talkpartikel ausgewählt sind aus der Gruppe, die von 2:1-Schichtsilikaten gebildet wird, die eine elektrische Ladung von Null und einen mittleren Äquivalentdurchmesser von zwischen 10 nm und 300 nm aufweisen, und
- mindestens 0,5 Ges.-% Partikel, als magnetische Partikel bezeichnet, die mindestens ein magnetisches Eisenoxid umfassen, ausgewählt aus der Gruppe, die von Magnetit und Maghemit gebildet wird, im Verhältnis zum Gesamtgewicht der besagten magnetischen Talk-Zusammensetzung, wobei die besagten magnetischen Partikel einen mittleren Äquivalentdurchmesser von zwischen 1 nm und 50 nm aufweisen.

**14.** Zusammensetzung nach Anspruch 13, **dadurch gekennzeichnet, dass** die besagten magnetischen Talkpartikel eine positive magnetische Suszeptibilität aufweisen.

**15.** Zusammensetzung nach einem der Ansprüche 13 und 14, **dadurch gekennzeichnet, dass** sie mindestens 0,5 Gew.-% Maghemitpartikel umfasst.

**Claims**

**1.** Process for preparing a composition, named a magnetic talcous composition, comprising mineral particles, named magnetic talcous particles, having a non-zero magnetic susceptibility, wherein, during a contacting step:

- talcous particles chosen from the group formed of the 2:1 sheet silicates having a zero electric charge and a mean equivalent diameter of from 10 nm to 300 nm are contacted with
- particles, named magnetic particles, comprising at least one magnetic iron oxide chosen from the group formed of magnetite and maghemite, said magnetic particles having a mean equivalent diameter of from 1 nm to 50 nm.

**2.** A process according to claim 1, **characterised in that** the talcous particles and the magnetic particles are contacted in a liquid medium.

**3.** A process according to either claim 1 or claim 2, **characterised in that**, during the contacting step:

- an aqueous solution is prepared,
- talcous particles and magnetic particles are added to the aqueous solution, and
- the aqueous solution is removed.

**4.** A process according to any one of claims 1 to 3, **characterised in that**, during the contacting step:

- at least one precursor element of said magnetic particles is introduced into an aqueous suspension comprising talcous particles,
- a precipitation reaction of said magnetic particles is carried out.

**5.** A process according to any one of claims 1 to 4, **characterised in that**, during the contacting step, the talcous particles and the magnetic particles are dried, the magnetic particles being in contact with the talcous particles.

**6.** A process according to claim 1, **characterised in that**, during the contacting step, co-grinding of the talcous particles and of the magnetic particles in the dry state is carried out.

**7.** A process according to any one of claims 1 to 6, **characterised in that** the 2:1 sheet silicates having a zero electric charge are devoid of interfoliar cations and of interfoliar water molecules.

**8.** A process according to any one of claims 1 to 7, **characterised in that** the talcous particles have the chemical formula $(Si_xGe_{1-x})_4M_3O_{10}(OH)_2$ wherein:

- x is a real number of the interval [0;1], and

- M denotes at least one divalent metal having the formula $Mg_{y(1)}Co_{y(2)}Zn_{y(3)}Cu_{y(4)}Mn_{y(5)}Fe_{y(6)}Ni_{y(7)}Cr_{y(8)}$; each *y(i)* representing a real number of the interval [0;1], and such that $\sum_{i=1}^{8} y(i) = 1$.

9.  A process according to any one of claims 1 to 8, **characterised in that** the talcous particles are formed of talc $Si_4Mg_3O_{10}(OH)_2$.

10. A process according to any one of claims 1 to 9, **characterised in that** said magnetic particles have a mean equivalent diameter of from 1 nm to 30 nm.

11. A process according to any one of claims 1 to 10, **characterised in that** said talcous particles have a mean equivalent diameter of from 10 nm to 200 nm.

12. A process according to any one of claims 1 to 11, **characterised in that**, during the contacting step, the talcous particles are contacted with the magnetic particles in such a manner that the ratio by mass between the magnetic particles and the talcous particles is from 0.005 to 4.

13. Composition, named a magnetic talcous composition, comprising mineral particles, named magnetic talcous particles, having a non-zero magnetic susceptibility, said magnetic talcous particles comprising:

    - at least 20 wt.% talcous particles relative to the total weight of said magnetic talcous composition, said talcous particles being chosen from the group formed of the 2:1 sheet silicates having a zero electric charge and a mean equivalent diameter of from 10 nm to 300 nm, and
    - at least 0.5 wt.% particles, named magnetic particles, comprising at least one magnetic iron oxide chosen from the group formed of magnetite and maghemite, relative to the total weight of said magnetic talcous composition, said magnetic particles having a mean equivalent diameter of from 1 nm to 50 nm.

14. A composition according to claim 13, **characterised in that** said magnetic talcous particles have a positive magnetic susceptibility.

15. A composition according to either claim 13 or claim 14, **characterised in that** it comprises at least 0.5 wt.% maghemite particles.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008009799 A
- WO 2007087172 A
- JP 61091907 B

**Littérature non-brevet citée dans la description**

- **YANG et al.** Magnetic and structural studies of the Verwey transition in Fe3-$\delta$O4 nanoparticles. *Journal de Physique Appliquée,* 01 Juin 2004, vol. 95 (11